# EUROPÄISCHE PATENTSCHRIFT

(11) **EP 2 407 692 B1**
(45) Veröffentlichungstag und Bekanntmachung des Hinweises auf die Patenterteilung: **07.06.2017**
(21) Anmeldenummer: 11401546.4
(22) Anmeldetag: 11.07.2011
(51) Int. Cl.: F16H 59/06, F16H 61/444, F16H 61/4043

(54) **Hydraulischer Fahrantrieb für einen Rasenmäher**
Hydraulic traction drive for a lawnmower
Entraînement de roulement hydraulique pour une tondeuse

(30) Priorität: 15.07.2010 DE 102010036413
(43) Veröffentlichungstag der Anmeldung: 18.01.2012
(73) Patentinhaber: Amazonen-Werke H. Dreyer GmbH & Co. KG, 49205 Hasbergen (DE)
(72) Erfinder: Klein, Laurent, 57350 Spicheren (FR)

(56) Entgegenhaltungen:
- EP-A1- 2 280 197
- EP-A2- 1 837 226
- US-A1- 2010 018 200

## Beschreibung

Die Erfindung betrifft einen hydraulischen Fahrantrieb gemäß dem Oberbegriff des Patentanspruches 1.

Ein derartiger hydraulischer Fahrantrieb ist durch die US 2010/0018200 A1 bekannt.

Ein weiterer hydraulischer Fahrantrieb für die Vorder- und Hinterräder für einen Rasenmäher ist durch die EP 2 014 958 A2 bekannt. Bei diesem Fahrantrieb unterstützen die Hinterräder im Nebentrieb den Vorwärtstrieb des Fahrzeuges durch die als Hauptantriebsräder im Hydraulikkreislauf angeordneten Vorderräder erforderlichenfalls nur bei Vorwärtsfahrt. Bei Rückwärtsfahrt werden nur die Hauptantriebsräder und nicht die Nebenantriebsräder angetrieben. Es ist also ein Allradantrieb nur bei Vorwärtsfahrt gewährleistet. Bei der o.g., gattungsbildenden US 2010/0018200 A1 wird dazu sichergestellt, dass sowohl bei Vorwärts- wie auch bei Rückwärtsfahrt eine Unterstützung der Hauptantriebsräder durch die Nebenantriebsräder erfolgt: Nämlich wird infolge der Anordnung von Bypassleitungen und Rückschlagventile gemäss Oberbegriff sichergestellt, dass sowohl bei Vorwärtsfahrt wie bei Rückwärtsfahrt, wenn die Hauptantriebsräder durchdrehen wollen, also durchrutschen, eine Unterstützung dessen Fahrbetriebes durch die Nebenantriebsräder erfolgt. Hierdurch wird ein wesentlich verbessertes Vorwärtsbewegen des Rasenmähers auch bei Rückwärtsfahrt sichergestellt. Auch bei der Betriebsweise des Fahrzeuges in Rückwärtsfahrt ist der Vierradantrieb und/oder Allradantrieb gewährleistet. Der Erfindung liegt die Aufgabe zu Grunde, in schwierigen Situationen das Stillstehen der Räder einer Seite zu vermeiden und ohne eine Art Differenzialsperre auskommen zu können.

Diese Aufgabe wird durch die Merkmale des Kennzeichens des Anspruches 1 gelöst: Erfindungsgemäss ist vorgesehen, dass für die den linken Rädern zugeordneten Hydraulikmotoren und für die den rechten Rädern zugeordneten Hydraulikmotoren jeweils getrennten Hydraulikkreisläufe mit jeweils zugeordneter angetriebener Hydraulikpumpe vorgesehen sind.

Eine einfache Ausgestaltung des Hydraulikkreislaufes wird dadurch erreicht, dass die Rückschlagventile in den Bypassleitungen derart angeordnet sind, dass sie bei Vorwärtsfahrt und bei Rückwärtsfahrt jeweils einen Hydraulikölumlauf jeweils nur über eine der Bypassleitungen gestatten. Hierdurch lässt sich in einfacher Weise gewährleisten, dass auch bei Rückwärtsfahrt eine Unterstützung des Antriebes durch die Nebenantriebsräder erfolgen kann, also tatsächlicher Allradantrieb.

Um in einfacher Weise zu erreichen, dass die Ausgestaltung des Hydraulikkreislaufes optimal ausgelegt ist, ist vorgesehen, dass die bei Vorwärtsfahrt über das Umschaltventil aktivierte Bypassleitung zwischen der Verbindungsleitung zwischen den in Reihe geschalteten Hydraulikmotoren der Vorder- und Hinterräder und der Rücklaufleitung des dem Hinterrad zugeordneten Hydraulikmotors angeordnet ist, und dass die bei Rückwärtsfahrt über das Umschaltventil aktivierte Bypassleitung zwischen der Verbindungsleitung zwischen den die in Reihe geschalteten Hydraulikmotoren der Vorder- und Hinterräder und der Zulaufleitung des dem Hinterrad zugeordneten Hydraulikmotors angeordnet ist.

Weitere Einzelheiten der Erfindung sind der Beispielsbeschreibung und den Zeichnungen zu entnehmen.

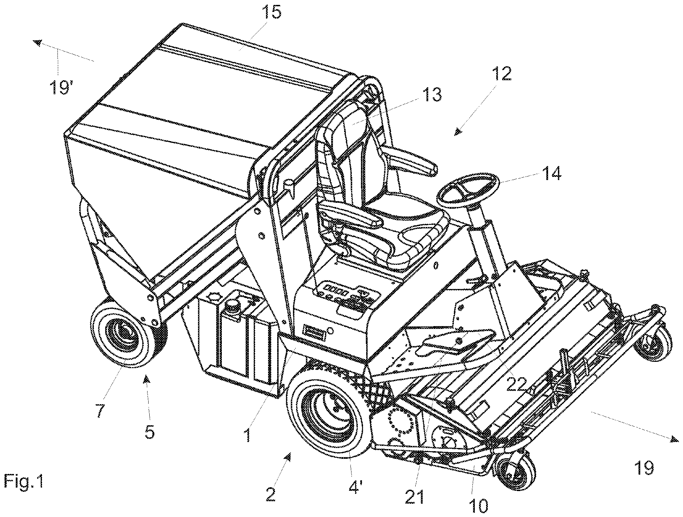

Hierbei zeigen
- Fig. 1: das als Rasenmäher ausgebildete selbstfahrende Gerät in perspektivischer Darstellung,

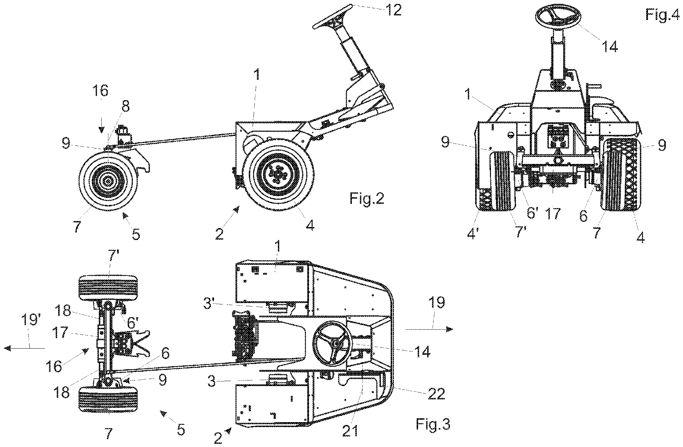

- Fig. 2: das selbstfahrende Gerät ohne Mähwerk, Motorantriebseinheit, Rahmenverbindungselemente und Aufnahmebehälter in Seitenansicht und in Prinzipdarstellung,
- Fig. 3: das selbstfahrende Gerät nach Fig. 2 in der Draufsicht und in Prinzipdarstellung,
- Fig. 4: das selbstfahrende Gerät nach Fig. 2 in der Rückansicht und in Prinzipdarstellung,
- Fig. 5: einen Hydraulikschaltplan für das selbstfahrende Gerät mit der Einstellung für die Vorwärtsfahrt und in Prinzipdarstellung und
- Fig. 6: einen Hydraulikschaltplan für das selbstfahrende Gerät mit der Einstellung für die Rückwärtsfahrt und in Prinzipdarstellung.

Das selbstfahrende Gerät ist als Rasenmäher ausgebildet. Das Gerät weist den Rahmen 1 auf. Im vorderen Bereich 2 des Rahmens 1 ist auf jeder Seite ein von einem Hydraulikmotor 3, 3' angetriebenes Vorderrad 4 und 4' angeordnet. Auf der Rückseite 5 des Rahmens 1 ist auf jeder Seite ein lenkbares und ebenfalls von einem Hydraulikmotor 6, 6' angetriebenes Hinterrad 7 und 7' angeordnet. Das jeweilige Hinterrad 7, 7' ist mittels eines eine aufrechte Achse 8 aufweisenden Gelenkes 9 am Rahmen 1 befestigt. Vor den Vorderrädern 4 und 4' ist an dem Rahmen 1 das Mähwerk 10 angeordnet. In dem Bereich zwischen den Vorder- 4, 4' und Hinterrädern 7, 7' ist die nicht dargestellte Motorantriebseinheit, welche einen Verbrennungsmotor und zwei von dem Motor angetriebene Hydraulikpumpen 11 und 11' aufweist, angeordnet. Oberhalb der Vorderräder 4 ist auf dem Rahmen 1 die Bedienungseinheit 12 mit dem Fahrersitz 13 und dem Lenkrad 14 angeordnet. Hinter dem Fahrersitz 13 ist oberhalb des Rahmens 1 und den Hinterrädern 7, 7' ein Aufnahmebehälter 15 zur Aufnahme des Mähgutes angeordnet.

Um die Hinterräder 7 und 7' zum Lenken bewegen zu können, das heißt, sie um die aufrechte Achsen 8 zu verdrehen, ist der Gelenkanordnung 16 der Gelenke 9 der Hinterräder 7 und 7' dem Hydraulikzylinder 17 zugeordnet. Die Hydraulikkolben 18 des Hydraulikzylinders 17 sind über Verbindungselemente mit der Gelenkanordnung 16 verbunden. Der Hydraulikzylinder 17 ist über nicht dargestellte Leitungen mit einem ebenfalls nicht dargestellten hydraulischen Betätigungsventil, welches von dem Lenkrad 14, welches auf der Vorderseite 2 des Rahmens 3 angeordnet ist, betätigt wird, verbunden. Das hydraulische Betätigungsventil ist mit der Hydraulikanlage des Gerätes in entsprechender Weise verbunden.

Den Vorderrädern 4 und 4' sowie den Hinterrädern 7 und 7' ist jeweils ein Hydraulikmotor 3, 3', 6, 6' zugeordnet. Diese Hydraulikmotoren 3, 3', 6, 6' sind über nicht dargestellte Leitungen mit Regeleinrichtungen der Hydraulikanlage des Gerätes verbunden. Über die Regeleinrichtungen lässt sich die den Hydraulikmotoren 3, 3', 6, 6' zugeleitete Ölmenge einstellen. Durch die den Hydraulikmotoren 3, 3' über die Leitungen 20, 20' von den Ölpumpen 11, 11' zugeleitete Ölmenge wird somit die Drehgeschwindigkeit, das heißt, die Vorwärtsgeschwindigkeit des Rasenmähers bestimmt.

An dem Rahmen 1 ist auf der Vorderseite 2 ein um eine zumindest annähernd horizontale und quer zur Fahrtrichtung 19 des Rasenmähers verlaufende Schwenkachse 21 verschwenkbares Stellelement, welches als Fußpedal 22 ausgebildet ist, angeordnet.

Diesem Stellelement 22 ist ein Sensorelement 23, welches die jeweilige Stellung des als Fußpedal 22 ausgebildeten Stellelementes erfasst, zugeordnet. Hierüber ist die Fahrgeschwindigkeit sowie die Vorwärts- und Rückwärtsfahrt einzustellen.

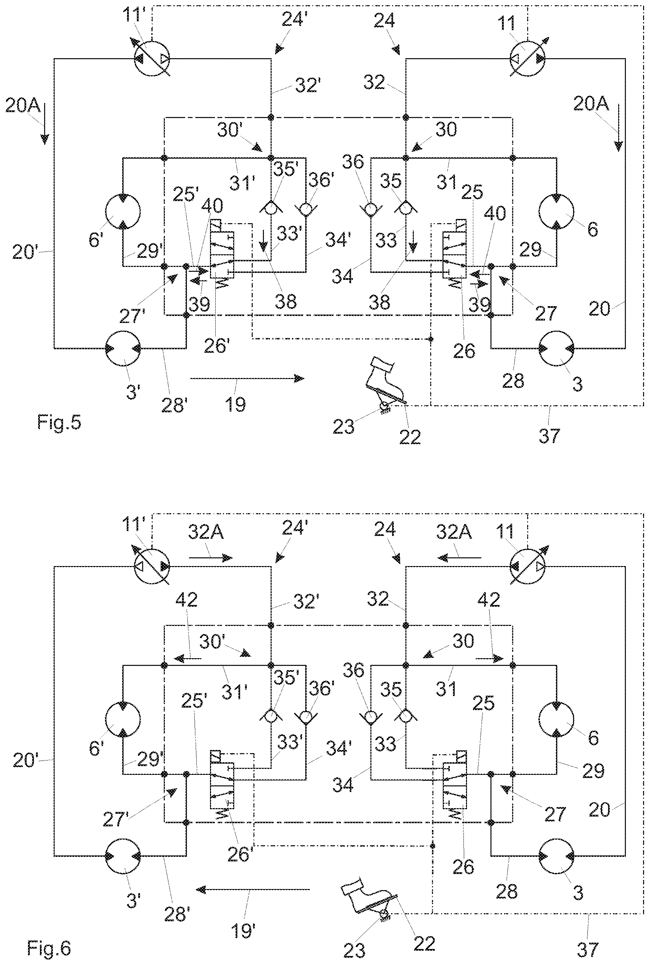

Der hydraulische Fahrantrieb für die Vorder- und Hinterräder des Rasenmähers ist wie folgt aufgebaut:
Das rechte Vorder- 4 und rechte Hinterrad 7 sowie das linke Vorder- 4' und linke Hinterrad 7' sind jeweils in einem eigenen Hydraulikkreislauf 24 bzw. 24' angeordnet, wie die Fig. 5 und 6 zeigen. Jedem Hydraulikkreislauf 24, 24' ist eine eigene Hydraulikpumpe 11 bzw. 11', die als Verstellpumpe ausgebildet ist, zugeordnet. Die Hydraulikmotoren 3, 3', 6, 6' jeder Seite für die Vorder- 4, 4' und Hinterräder 7, 7' sind in jedem Hydraulikkreislauf 24, 24' in Reihe geschaltet. In jedem Hydraulikkreislauf 24, 24' ist eine Bypassleitung 25, 25' mit einem Umschaltventil 26, 26' zwischen der die beiden Hydraulikmotoren 3, 3', 6, 6' für die Vorder- 4, 4' und Hinterräder 7, 7' miteinander verbindenden Hydraulikleitungen 27, 27', welche aus den Leitungsabschnitten 28, 28', 29, 29' bestehen, und der Rücklaufleitungen 30, 30', welche aus den Leitungsabschnitten 31, 31', 32, 32' bestehen, zwischen dem dem Hinterrad 7, 7' zugeordneten Hydraulikmotor 6, 6' und der Hydraulikpumpe 11, 11' angeordnet. Die Bypassleitung 25, 25' teilt sich zwischen dem Umschaltventil 26, 26' und der bei Vorwärtsfahrt in Fahrtrichtung 19 als Rücklaufleitung dienenden Hydraulikleitung 30, 30' in zwei Bypassleitungen 33, 33', 34, 34' auf. In jeder der beiden Bypassleitungen 33, 33', 34, 34' zwischen dem Umschaltventil 26, 26' und der Rücklaufleitung 30, 30' ist jeweils ein Rückschlagventil 35, 35', 36, 36' angeordnet. Die in den beiden Bypassleitungen 33, 33', 34, 34' angeordneten Rückschlagventile 35, 35', 36, 36' sind vom jeweiligen Umschaltventil 26, 26' aus gesehen in zueinander entgegengesetzten Durchflussrichtungen angeordnet.

Die Rückschlagventile 35, 35', 36, 36'sind in den Bypassleitungen 33, 33', 34, 34' derart angeordnet, dass sie bei Vorwärtsfahrt in Pfeilrichtung 19 und bei Rückwärtsfahrt in Pfeilrichtung 19' jeweils einen Hydraulikumlauf jeweils nur über eine der Bypassleitungen 33, 33', 34, 34' gestatten. Wenn von Vorwärtsfahrt auf Rückwärtsfahrt durch die entsprechende Stellung des Fußpedals 22 durch den Sensor 23 umgeschaltet wird, werden auch die beiden Umschaltventile 26, 26' sowie die Hydraulikpumpen 11, 11' umgeschaltet, wie ein Blick auf die Fig. 5 und 6 zeigt. Das Sensorelement 23 ist über die Datenleitungen 37 mit den Umschaltventilen 26, 26' und in den Hydraulikpumpen 11, 11' verbunden. Über diese Datenleitungen 37 werden dann entsprechende Schalt- und/oder Stellsignale von dem Sensorelement 23 übertragen, so dass die Umschaltventile 26, 26' und die Hydraulikpumpen 11, 11' zwischen den Einstellpositionen für Vorwärts- gemäß Fig. 5 und Rückwärtsfahrt gemäß Fig. 6 entsprechend umgeschaltet werden.

Die bei Vorwärtsfahrt in Pfeilrichtung 19 entsprechend Fig.5 über das jeweilige Umschaltventil 26, 26' jeweils aktivierte Bypassleitung 33, 33' ist zwischen dem Leitungsabschnitt 29, 29' zwischen den in Reihe geschalteten Hydraulikmotoren 3, 3' 6, 6' der Vorder- 4, 4' und Hinterräder 7, 7' und der Rücklaufleitung 32, 32' sowie dem Leitungsabschnitt 31, 31' des dem Hinterrad 7, 7' zugeordneten Hydraulikmotors 6, 6' angeordnet.

Wenn die Umschaltung auf Rückwärtsfahrt in Pfeilrichtung 19' entsprechend Fig. 6 geschehen ist, ist die bei Rückwärtsfahrt über das Umschaltventil 26, 26' aktivierte Bypassleitung 34, 34' zwischen der Verbindungsleitung 27, 27' zwischen den in die in Reihe geschalteten Hydraulikmotoren 3, 3' 6, 6' der Vorder- 4, 4' und Hinterräder 7, 7' und der Zulaufleitung 30, 30' des dem Hinterrad 7, 7' zugeordneten Hydraulikmotors 6, 6' angeordnet.

Die Umschaltung der Umschaltventile 26, 26' erfolgt über das dem Fußpedal 22 zugeordnete Sensorelement 23. Bei Vorwärtsfahrt ist das Fußpedal 22 nach vorne durchgedrückt, wie in Fig. 5 in Prinzipdarstellung dargestellt ist. Wenn das Fußpedal 22 über die Neutralstellung in die in Fig. 6 in Prinzipdarstellung dargestellte Stellung gebracht ist, werden bei Passieren der neutralen Mittelstellung über den Sensor 22, der dem Fußpedal 23 zugeordnet ist, Datensignale an die Umschaltventile 26, 26' und den den Hydraulikpumpen 11, 11' zugeordneten Einstelleinrichtungen von der Stellung gemäß Fig. 5 in die Stellung gemäß Fig. 6 oder umgedreht entsprechend umgeschaltet.

Der Hydraulikkreislauf ist derart ausgelegt, dass sowohl bei Vorwärts- wie bei Rückwärtsfahrt nur die Vorderräder 4, 4' über die Hydraulikmotoren 3, 3', also die Hauptantriebsräder den Rasenmäher antreiben; erst wenn die Hauptantriebsräder 4, 4' durchrutschen, also übermäßigen Schlupf haben, treiben auch die Hydraulikmotoren 6, 6' die Hinterräder 7, 7' den Rasenmäher an.

Die Funktionsweise bei Vorwärtsfahrt gemäß Fig. 5, wenn die Vorderräder 4, 4', also die Hauptantriebsräder nicht durchrutschen bzw. nicht durchdrehen, also keinen Schlupf und/oder den normalen Schlupf aufweisen, ist folgende:
Über die Hydraulikpumpen 11, 11' wird über die Leitungen 20, 20' in Pfeilrichtung 20A den Hydraulikmotoren 3, 3' Hydrauliköl zugeleitet, so dass die Vorderräder 4, 4' angetrieben werden. Aufgrund der Auslegung des Systems fließt das Hydrauliköl von den Hydraulikmotoren 3, 3' über die Leitungsabschnitte 28, 28', 29, 29' zu den Hydraulikmotoren 6, 6' der Hinterräder 7, 7' und weiter zu den Leitungsabschnitten 31, 31'. Weil die in den Leitungsabschnitten 31, 31'ankommende Ölmenge größer ist als die Ölmenge, die zu den Hydraulikpumpe 11, 11' zurückfließen kann, fließt die übrige Ölmenge durch die Umschaltventile 26, 26' und die Bypassleitungen 33, 33' in Pfeilrichtung 38 und weiter in Pfeilrichtung 39 über die Leitungsabschnitte 25, 25', 29, 29' zu den Hydraulikmotoren 6, 6' zurück und kreist somit über die Bypassleitung 33, 33' innerhalb der jeweiligen Hydraulikkreisläufe 24, 24'.

Die Funktionsweise bei Vorwärtsfahrt gemäß Fig. 5, wenn Vorderräder, also die Hauptantriebsräder durchrutschen bzw. durchdrehen, ist folgende:
Über die Hydraulikpumpen 11, 11' wird über die Leitungen 20, 20' in Pfeilrichtung 20A den Hydraulikmotoren 3, 3' Hydrauliköl zugeleitet, so dass die Vorderräder 4, 4' angetrieben werden. Wenn die Vorderräder 4, 4' durchdrehen, also wesentlich schneller drehen als die Hinterräder 7, 7', fließt wesentlich mehr Öl durch die Leitungen 28, 28', 29, 29', 31, 31' als über die Bypassleitung 33, 33' fließen kann, weil über die Leitungsabschnitte 28, 28' eine größere Ölmenge ankommt und somit ein Gegendruck in Pfeilrichtung 40 aufgebaut wird, so dass weniger oder kein Hydrauliköl in Pfeilrichtung 38, 39 fließen kann. Somit wird den Leitungsabschnitten 29, 29' der Hydraulikmotoren 6, 6' mehr Öl zugeleitet; hierdurch treiben die Hydraulikmotoren 6, 6' die Hinterräder 7, 7' zusätzlich mit an. Somit unterstützen die jetzt über die Hydraulikmotoren 6, 6' angetriebenen Hinterräder 7, 7' den Vorwärtstrieb des Rasenmähers.

Die Funktionsweise bei Rückwärtsfahrt gemäß Fig. 6, wenn die Antriebsräder nicht durchrutschen bzw. nicht durchdrehen, also keinen Schlupf und/oder den normalen Schlupf aufweisen, ist folgende:
Über die Hydraulikpumpen 11, 11' wird über die Leitungen 32, 32', 31, 31' in Pfeilrichtung 32A den Hydraulikmotoren 6, 6' Hydrauliköl zugeleitet, so dass die Hinterräder 7, 7' angetrieben werden. Aufgrund der Auslegung des Systems fließt das Hydrauliköl von den Hydraulikmotoren 6, 6' über die Leitungsabschnitte 28, 28', 29, 29' zu den Hydraulikmotoren 3, 3' der Vorderräder 4, 4' und weiter zu den Leitungsabschnitten 20, 20'. Weil die in den Leitungsabschnitten 29, 29'ankommende Ölmenge größer ist als die Ölmenge, die zu den Hydraulikmotoren 3, 3' fließen kann, fließt die übrige Ölmenge durch die Umschaltventile 26, 26' und die Bypassleitungen 34, 34' in Pfeilrichtung 41 und weiter in Pfeilrichtung 42 über die Leitungsabschnitte 31, 31' zu den Hydraulikmotoren 6, 6' zurück und kreist somit 2-über die Bypassleitung 34, 34' innerhalb der jeweiligen Hydraulikkreisläufe 24, 24'.

Die Funktionsweise bei Rückwärtsfahrt gemäß Fig. 6, wenn Antriebsräder durchrutschen bzw. durchdrehen ist folgende:
Über die Hydraulikpumpen 11, 11' wird über die Leitungen 32, 32' in Pfeilrichtung 32A den Hydraulikmotoren 3, 3, 3', 6, 6' Hydrauliköl zugeleitet, so dass die Vorderräder 4, 4' angetrieben werden. Wenn die Vorderräder 4, 4' durchdrehen, also wesentlich schneller drehen als die Hinterräder 7, 7' fließt wesentlich mehr Öl durch die Leitungen 28, 28', 34, 34'. Somit wird den Leitungsabschnitten 31, 31' der Hydraulikmotoren 6, 6' mehr Öl zugeleitet; hierdurch treiben die Hydraulikmotoren 6, 6' die Hinterräder 7, 7' mit an. Somit unterstützen die jetzt über die Hydraulikmotoren 6, 6' angetriebenen Hinterräder 7, 7' den Rückwärtstrieb der Vorderräder 4, 4'.

Auch bei Kurvenfahrt, das heißt, dass die Räder 4, 4', 7, 7' der kurvenäußeren Seite schneller auf dem Boden abrollen als auf der kurveninneren Seite, wird sinngemäß wie vorbeschriebenen das Öl im Kreislauf sowohl bei Vorwärts, wie Rückwärtsfahrt über die Bypassleitungen 33, 33, 34, 34 entsprechend im Kreislauf geleitet.

## Patentansprüche

1. Hydraulischer Fahrantrieb für die Vorder- und Hinterräder eines Rasenmähers mit jeweils auf jeder Seite einem Vorder- und einem Hinterrad zugeordneten hydraulischen Antriebsmotor, die auf jeder Seite in Reihe in einem Hydraulikkreislauf angeordnet sind, wobei in jedem Hydraulikreislauf zumindest eine Bypassleitung mit zumindest einem Umschaltventil und zumindest einem Rückschlagventil angeordnet ist, wobei zwei Bypassleitungen (33, 33' 34, 34') an das Umschaltventil (26, 26') angeschlossen sind, dass in jeder Bypassleitung (33, 33' 34, 34') ein Rückschlagventil (35, 35', 36, 36') angeordnet ist, und wobei die in den beiden Bypassleitungen (33, 33' 34, 34') angeordneten Rückschlagventile (35, 35', 36, 36') vom Umschaltventil (26, 26') gesehen in zueinander entgegengesetzter Durchflussrichtung angeordnet sind, **dadurch gekennzeichnet, dass** für die den linken Rädern (4', 7') zugeordneten Hydraulikmotoren (3', 6') und für die den rechten Rädern (4, 7) zugeordneten Hydraulikmotoren (3, 6) jeweils getrennten Hydraulikkreisläufe (24, 24') mit jeweils zugeordneter angetriebener Hydraulikpumpe (11, 11') vorgesehen sind.

2. Hydraulischer Fahrantrieb nach Anspruch 1, **dadurch gekennzeichnet, dass** die Rückschlagventile (35, 35', 36, 36') in den Bypassleitungen (33, 33' 34, 34') derart angeordnet sind, dass sie bei Vorwärtsfahrt (19) und bei Rückwärtsfahrt (19') jeweils einen Hydraulikölumlauf jeweils nur über eine der Bypassleitungen (33, 33' 34, 34') gestatten.

3. Hydraulischer Fahrbetrieb nach zumindest einem der vorstehenden Ansprüche, **dadurch gekennzeichnet, dass** die bei Vorwärtsfahrt (19) über das Umschaltventil (26, 26') aktivierte Bypassleitung (33, 33') zwischen der Verbindungsleitung (27, 27') zwischen den in Reihe geschalteten Hydraulikmotoren (3, 3', 6, 6') der Vorder- (4, 4') und Hinterräder (7, 7') und der Rücklaufleitung (32, 32') des dem Hinterrad (7, 7') zugeordneten Hydraulikmotors (6, 6') angeordnet ist, und dass die bei Rückwärtsfahrt (19') über das Umschaltventil (26, 26') aktivierte Bypassleitung (34, 34') zwischen der Verbindungsleitung (27, 27') zwischen den die in Reihe geschalteten Hydraulikmotoren (3, 3', 6, 6') der Vorder- (4, 4') und Hinterräder (7, 7') und der Zulaufleitung (32, 32') des dem Hinterrad zugeordneten Hydraulikmotors (6, 6') angeordnet ist.

## Claims

1. Hydraulic traction drive for the front and rear wheels of a lawnmower, with a hydraulic drive motor respectively assigned on each side to a front wheel and to a rear wheel, said drive motors being arranged on each side in series in a hydraulic circuit, wherein at least one bypass line with at least one changeover valve and at least one nonreturn valve is arranged in each hydraulic circuit, wherein two bypass lines (33, 33', 34, 34') are connected to the changeover valve (26, 26'), in that a nonreturn valve (35, 35', 36, 36') is arranged in each bypass line (33, 33', 34, 34'), and wherein the nonreturn valves (35, 35', 36, 36') arranged in the two bypass lines (33, 33', 34, 34') are arranged in a mutually opposed flow direction, as seen from the changeover valve (26, 26'), **characterized in that** hydraulic circuits (24, 24') which are in each case separate and have a respectively assigned, driven hydraulic pump (11, 11') are provided for the hydraulic motors (3', 6') assigned to the left wheels (4', 7') and for the hydraulic motors (3, 6) assigned to the right wheels (4, 7).

2. Hydraulic traction drive according to Claim 1, **characterized in that** the nonreturn valves (35, 35', 36, 36') are arranged in the bypass lines (33, 33', 34, 34') in such a manner that they in each case permit circulation of hydraulic oil in each case only via one of the bypass lines (33, 33', 34, 34') during forwards travel (19) and during rearwards travel (19').

3. Hydraulic traction drive according to at least either of the preceding claims, **characterized in that** the bypass line (33, 33') which is activated via the changeover valve (26, 26') during forwards travel (19) is arranged between the connecting line (27, 27') between the series-connected hydraulic motors (3, 3', 6, 6') of the front wheels (4, 4') and rear wheels (7, 7') and the return line (32, 32') of the hydraulic motor (6, 6') assigned to the rear wheel (7, 7'), and **in that** the bypass line (34, 34') which is activated via the changeover valve (26, 26') during rearwards travel (19') is arranged between the connecting line (27, 27') between the series-connected hydraulic motors (3, 3', 6, 6') of the front wheels (4, 4') and rear wheels (7, 7') and the supply line (32, 32') of the hydraulic motor (6, 6') assigned to the rear wheel.

## Revendications

1. Entraînement de conduite hydraulique pour les roues avant et arrière d'une tondeuse à gazon, comprenant à chaque fois un moteur d'entraînement hydraulique associé, de chaque côté, à une roue avant et une roue arrière, lesquels moteurs d'entraînement sont disposés de chaque côté en série dans un circuit hydraulique, au moins une conduite de dérivation étant disposée dans chaque circuit hydraulique avec au moins une soupape d'inversion et au moins un clapet antiretour, deux conduites de dérivation (33, 33', 34, 34') étant raccordées à la soupape d'inversion (26, 26'), que dans chaque conduite de dérivation (33, 33', 34, 34') est disposé un clapet antiretour (35, 35', 36, 36'), et les clapets antiretour (35, 35', 36, 36') disposés dans les deux conduites de dérivation (33, 33', 34, 34') étant disposés, vu depuis la soupape d'inversion (26, 26'), dans une direction d'écoulement opposée l'un à l'autre, **caractérisé en ce que** pour les moteurs hydrauliques (3', 6') associés aux roues gauches (4', 7') et pour les moteurs hydrauliques (3, 6) associés aux roues droites (4, 7) sont à chaque fois prévus des circuits hydrauliques séparés (24, 24') avec une pompe hydraulique entraînée (11, 11') respectivement associée.

2. Entraînement de conduite hydraulique selon la revendication 1, **caractérisé en ce que** les clapets antiretour (35, 35', 36, 36') sont disposés dans les conduites de dérivation (33, 33', 34, 34') de telle sorte qu'ils permettent une circulation d'huile hydraulique uniquement par le biais de l'une des conduites de dérivation (33, 33', 34, 34') lors de la conduite en marche avant (19) et lors de la conduite en marche arrière (19').

3. Entraînement de conduite hydraulique selon au moins l'une quelconque des revendications précédentes, **caractérisé en ce que** la conduite de dérivation (33, 33') activée lors de la conduite en marche avant (19) par le biais de la soupape d'inversion (26, 26') est disposée entre la conduite de liaison (27, 27') entre les moteurs hydrauliques montés en série (3, 3', 6, 6') des roues avant (4, 4') et des roues arrière (7, 7') et la conduite de retour (32, 32') du moteur hydraulique (6, 6') associé à la roue arrière (7, 7') et **en ce que** la conduite de dérivation (34, 34') activée lors de la conduite en marche arrière (19') par le biais de la soupape d'inversion (26, 26') est disposée entre la conduite de liaison (27, 27') entre les moteurs hydrauliques montés en série (3, 3', 6, 6') des roues avant (4, 4') et des roues arrière (7, 7') et la conduite d'alimentation (32, 32') du moteur hydraulique (6, 6') associé à la roue arrière.
